(19) Europäisches Patentamt
European Patent Office
Office européen des brevets

(11) **EP 2 956 012 B1**

(12) **EUROPÄISCHE PATENTSCHRIFT**

(45) Veröffentlichungstag und Bekanntmachung des Hinweises auf die Patenterteilung:
**10.04.2019  Patentblatt 2019/15**

(21) Anmeldenummer: **14705327.6**

(22) Anmeldetag: **17.02.2014**

(51) Int Cl.:
*A23K 20/147* (2016.01)     *A23K 20/174* (2016.01)
*A23K 20/20* (2016.01)      *A23K 40/20* (2016.01)
*A23K 50/80* (2016.01)      *A23J 3/18* (2006.01)
*A23N 17/00* (2006.01)

(86) Internationale Anmeldenummer:
**PCT/EP2014/053043**

(87) Internationale Veröffentlichungsnummer:
**WO 2014/125111 (21.08.2014 Gazette 2014/34)**

(54) **VORRICHTUNG ZUR DURCHFÜHRUNG EINES VERFAHREN ZUR PELLETIERUNG VON GLUTENHALTIGEM SCHÜTTGUT**

DEVICE FOR THE IMPLEMENTATION OF A PROCESS FOR THE PELLETISATION OF BULK GOODS CONTAINING GLUTEN

DISPOSITIF POUR LA MISE EN OEUVRE D'UN PROCÉDÉ DE PELLETISATION DE PRODUITS EN VRAC CONTENANT DU GLUTEN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2013  EP 13155519**

(43) Veröffentlichungstag der Anmeldung:
**23.12.2015  Patentblatt 2015/52**

(73) Patentinhaber: **Bühler AG**
**9240 Uzwil (CH)**

(72) Erfinder:
• **FRANKE, Matthias**
  **CH-8584 Leimbach (CH)**
• **FLECK, Dirk-Michael**
  **CH-8280 Kreuzlingen (CH)**

(74) Vertreter: **Hepp Wenger Ryffel AG**
**Friedtalweg 5**
**9500 Wil (CH)**

(56) Entgegenhaltungen:
**EP-A1- 0 040 406     EP-A1- 1 066 759
EP-B1- 1 785 039     WO-A1-2011/075140
GB-A- 2 111 366      US-A- 4 929 163
US-A- 5 308 566      US-A- 5 871 802**

• **OVERLAND ET AL: "Technical quality of dog food and salmon feed containing different bacterial protein sources and processed by different extrusion conditions", ANIMAL FEED SCIENCE AND TECHNOLOGY, ELSEVIER, AMSTERDAM, NL, Bd. 134, Nr. 1-2, 25. Februar 2007 (2007-02-25), Seiten 124-139, XP005905212, ISSN: 0377-8401, DOI: 10.1016/J.ANIFEEDSCI.2006.05.014**

**Beschreibung**

Die Erfindung betrifft eine Vorrichtung zur Durchführung eines Verfahrens zur Pelletierung von glutenhaltigem Schüttgut zur Herstellung von Pellets gemäss dem Oberbegriff des unabhängigen Anspruchs.

Aus der EP 1 785 039 B1 ist ein Verfahren zur Herstellung von Pellets umfassend vitales Weizengluten bekannt. Zur Pelletherstellung wird eine glutenhaltige Trockensubstanz unter anderem mit Dampf behandelt, um Bindekräfte im Gluten freizusetzen, so dass die Herstellung im Wesentlichen formstabiler Pellets ermöglicht wird.

Aus der EP 0 711 510 B1 ist ein Verfahren zur Herstellung eines Fermentierungsmaterials bekannt, bei dem ein getrocknetes Gluten-Produkt einer Dampfbehandlung unterzogen wird. Gemäss der EP 0 711 510 B1 soll eine Zugabe von Wasser vor der Dampfbehandlung möglichst vermieden werden, damit das behandelte Gluten nicht zu klebrig wird, da eine Zugabe von Wasser gegebenenfalls eine Weiterverarbeitung des behandelten Glutens verhindern oder erschweren kann durch eine zu starke Erhöhung einer Viskoelastizität, bei der eine Förderung des behandelten Glutens kaum mehr möglich ist.

Diese vorbekannten Behandlungsverfahren weisen jedoch den Nachteil auf, dass die Dampfzuführung zu einer Kondensatbildung und damit zu starken Verklebungen in einer Konditioniereinrichtung oder auch an einem Pelletpresseneinlass führen kann. Zudem wird das Gluten durch die mit der Dampfbehandlung erzielte Temperaturerhöhung teilweise denaturiert. Hierdurch werden gegebenenfalls Backeigenschaften des dampfbehandelten Glutens verschlechtert, da unter Umständen eine durch das dampfbehandelte Gluten erzeugte Bindekraft nicht ausreichend ist für eine gute Stabilität eines Backprodukts. Weiterhin werden aus dampfbehandeltem Gluten hergestellte Pellets häufig in der Fischfutterindustrie als Fischfutter verwendet; im Fischfutter ist das Gluten ein wichtiger Proteinträger und ein wichtiges Bindemittel für eine möglichst hohe Wasserstabilität der Pellets, wobei die Wasserstabilität bei der Verwendung von dampfbehandeltem Gluten aber nicht immer ausreichend ist. Ein weiterer Nachteil der vorbekannten Verfahren ist ein hoher Energieverbrauch durch eine notwendige Bereitstellung von Dampf; zudem sind für die Bereitstellung des Dampfes entsprechende Einrichtungen zur Dampferzeugung, Dampfzuführung und gegebenenfalls zur Regelung der Menge und/oder der Temperatur des zugeführten Dampfes erforderlich, was hohe Investitionskosten verursacht.

Aus der US 5 308 566 A sind eine Vorrichtung und ein Verfahren zur Pelletierung von stärkehaltigem Schüttgut bekannt, wobei das Schüttgut in einer Konditioniereinrichtung mit einer Flüssigkeit besprüht und damit benetzt wird.

Aus der US 4 929 163 A sind ein Verfahren und eine Vorrichtung zur Pelletierung von Schüttgut bekannt, wobei das Schüttgut in einer Konditioniereinrichtung mit Wasser benetzt wird.

Aus der EP 0 040 406 A1 ist eine Vorrichtung zur Pelletierung von Schüttgut mit einer Konditioniereinrichtung bekannt, welche eine Dampfdüse und eine Melassedüse aufweist.

Es ist daher eine Aufgabe der vorliegenden Erfindung, die Nachteile des Bekannten zu vermeiden, insbesondere also eine Vorrichtung zur Pelletierung von glutenhaltigem Schüttgut bereitzustellen, mit denen eine erhöhte Formstabilität der hergestellten Pellets erreicht wird bei verringertem Energieverbrauch in der Herstellung. Eine weitere Aufgabe ist die Verringerung eines Reinigungsaufwandes der Vorrichtung zur Pelletierung durch Vermeidung von Ablagerungen und/oder Verklebungen in der Vorrichtung, was den Durchsatz durch die Vorrichtung erhöht und damit den Betrieb kostengünstiger macht.

Diese Aufgaben werden durch eine Vorrichtung zur Durchführung eines Verfahrens gemäss dem unabhängigen Anspruch gelöst.

Das mit der erfindungsgemässen Vorrichtung durchgeführte Verfahren zum Pelletieren von glutenhaltigem Schüttgut umfasst den Schritt des Förderns des Schüttguts in eine Konditioniereinrichtung. Ein weiterer Schritt ist das Benetzen des Schüttguts in der Konditioniereinrichtung mit zumindest einer zerstäubten Flüssigkeit zur Erhöhung des Feuchtigkeitsgehalts des Schüttguts. Eine Temperatur der zerstäubten Flüssigkeit ist im Wesentlichen kleiner als 100°C. Ein weiterer Schritt ist ein Fördern des benetzten Schüttguts in eine Pelletpresse zum Pelletieren des benetzten Schüttguts. Anschliessend an das Pelletieren erfolgt eine Abführung der Pellets aus der Pelletpresse.

Dieses Verfahren weist den Vorteil auf, dass eine schonendere Behandlung des glutenhaltigen Schüttguts durch eine gegenüber dem Stand der Technik tiefere Behandlungstemperatur ermöglicht wird, so dass eine Denaturierung so weit wie möglich vermieden werden kann und eine Bindefähigkeit des behandelten Schüttguts erhöht wird. Hierdurch kann eine Vitalität der Proteine, insbesondere des Glutens, weitestgehend Aufrecht erhalten werden. Dadurch lassen sich formstabilere Pellets gegenüber dem Stand der Technik herstellen, die unter anderem besser transportierbar sind. Zudem können die Pellets als Futtermittel bessere Eigenschaften wie beispielsweise eine längere Haltbarkeit im Wasser aufweisen, wenn diese als Fischfutter verwendet werden, was zu einem verringerten Verlust an Futtermittel führt.

Ein weiterer Vorteil des mit einer erfindungsgemässen Vorrichtung durchgeführten Verfahrens ist eine geringere Verklebung bzw. das Auftreten von weniger Ablagerungen von behandeltem Protein unter anderem am Pelletpresseneinlass, was den Reinigungsaufwand verringert und damit den Durchsatz durch die Vorrichtung erhöht. Zudem verringert sich vorteilhaft der Energieverbrauch der Vorrichtung während der Durchführung des Verfahrens, da auf eine Dampferzeugung verzichtet werden kann, die energieaufwendig ist; somit lässt sich das erfindungsgemässe Verfahren energieeffizienter durchführen.

Die Schritte des Förderns des Schüttguts sowie des Förderns des benetzten Schüttguts können aktiv beispielsweise mittels einer Zwangsförderung durch eine Fördereinrichtung durchgeführt werden. Alternativ ist es möglich, das Fördern des Schüttguts bzw. des benetzten Schüttguts passiv beispielsweise mittels Schwerkraft durchzuführen.

Unter dem Begriff Gluten wird im Sinne der Anmeldung das Produkt verstanden, welches durch Auswaschen, bevorzugt mit Wasser, aus einem stärkehaltigen Ausgangsmaterial, insbesondere Mehl, Mahlgut, Getreidekörnern oder sonstigen stärkeenthaltenden Körnern, gewonnen und anschliessend getrocknet wird. Weizengluten besteht in der Regel aus wenigstens 75 Gew.-% Protein, bevorzugt 80 bis 85 Gew.-% Protein, und enthält maximal 15 Gew-% Wasser, bevorzugt 6 bis 10 Gew-% Wasser. Bei der Bestimmung des Proteingehalts wird ein Faktor von 6,25 bei der Umrechnung aus Stickstoff herangezogen.

Unter dem Begriff Schüttgut wird im Sinne der Anmeldung ein körniges, mehliges oder auch stückiges Gut verstanden, das in einer schüttfähigen Form vorliegt und insbesondere fliessfähig oder rieselfähig ist.

Unter einem vitalen Protein wird im Sinne der vorliegenden Anmeldung ein im Wesentlichen nicht denaturiertes Protein verstanden. Insbesondere hat ein vitales Weizengluten eine hohe Elastizität, wenn Wasser dem vitalen Weizengluten zugegeben wird.

Unter einem Zerstäuben einer Flüssigkeit wird im Sinne der Anmeldung die Erzeugung eines Aerosols verstanden und keine Verdampfung.

Das Schüttgut umfasst vitales Weizengluten mit einem Anteil von zumindest 95 Gew.-% und bevorzugt zumindest 98 Gew.-%.

Dies hat den Vorteil, dass ein als Futtermittel mit hohem Nährwert geeignetes Pellet effizient und kostengünstig hergestellt werden kann.

Insbesondere weist das vitale Gluten im Pellet eine Lösungsmittelrückhaltefähigkeit im Bereich von 120% - 170% SRC und bevorzugt von 130% - 150% SRC oder einen Proteinlöslichkeitsindex im Bereich von 50% bis 90% und bevorzugt von 60% bis 80% auf.

Diese Lösungsmittelrückhaltefähigkeit (Solvent Retention Capacity (SRC)) oder dieser Proteinlöslichkeitsindex des Glutens im Pellet haben den Vorteil, dass ein ausreichend vitales Gluten im erfindungsgemäss hergestellten Pellet gewährleistet werden kann, was zu einer guten Bindekraft im Pellet führt und damit die Herstellung formstabiler Pellets ermöglicht wird.

Die Lösungsmittelrückhaltefähigkeit (SRC) wird nach der Methode gemäss dem Artikel von Xiao et al (Cereal Chem. 83(5):465-471, Solvent Retention Capacity Values in Relation to Hard Winter Wheat and Flour Properties and Straight Dough Breadmaking Quality) auf Seite 466 im Abschnitt "Solvent Retention Capacity (SRC) Tests" bestimmt.

Der Proteinlöslichkeitsindex wird wie in der Publikation von Kratzer, Diss. ETH Zürich Nr. 17229, 2007, berechnet:

$$\text{Proteinlöslichkeitsindex } [\%] = \frac{\text{Protein löslich } [\%] * 100}{\text{Protein total } [\%]}$$

Hierfür werden zwei im Wesentlichen identische Proben vorbereitet, wobei der Totalstickstoffgehalt der ersten Probe der zwei Proben gemäss der Dumas-Methode bestimmt wird zur Bestimmung des gesamten Proteingehalts (Protein total [%]) der Probe. Die zweite Probe der zwei Proben wird mit Essigsäure mit einer Konzentration von 0,5 mol/L während 2 Stunden bei Raumtemperatur behandelt, um das in der Probe enthaltene lösliche Protein zu lösen; anschliessend wird der Stickstoffgehalt der gelösten Proteine gemäss der Kjeldahl-Methode bestimmt (Protein löslich [%]). Die Proteinlöslichkeit stellt ein Mass für die Proteindenaturierung dar, wobei abnehmende Löslichkeit auf zunehmende Denaturierung und Verlust der Vitalität hinweist.

Der Schritt des Benetzens des Schüttguts erfolgt in einer als Mischer ausgebildeten Konditioniereinrichtung, wobei während der Benetzung und/oder anschliessend an die Benetzung ein Mischen des benetzten Schüttguts erfolgt, wobei vorzugsweise im Wesentlichen keine aktive Heizung des Schüttguts und/oder des benetzten Schüttguts erfolgt.

Unter der Formulierung, dass im Wesentlichen keine aktive Heizung des Schüttguts und/oder des benetzten Schüttguts erfolgt, wird im Sinne der vorliegenden Anmeldung verstanden, dass mittels einer Heizeinrichtung der Konditioniereinrichtung eine Erhöhung der Eingangstemperatur des Schüttguts um höchstens 5°C und bevorzugt um höchsten 1°C erfolgt; eine gegebenenfalls weitere Erwärmung kann jedoch beispielsweise beim Mischen durch den Eintrag mechanischer Energie in das gegebenenfalls benetzte Schüttgut erfolgen.

Dies hat den Vorteil, dass bei der Beaufschlagung des Schüttguts und/oder des benetzten Schüttguts mit der zerstäubten Flüssigkeit ein Mischen erfolgen kann zur Erreichung einer möglichst homogenen Benetzung des Schüttguts. Somit wird eine Herstellung von möglichst stabilen und qualitativ hochwertigen Pellets ermöglicht.

Im Stand der Technik wird üblicherweise zur Konditionierung des Schüttguts vor der Pelletherstellung bis zu 8 Gew.-% Dampf bezogen auf ein Eingangsgewicht des Schüttguts zugegeben, was einem spezifischen thermischen Energieeintrag von etwa 50 kWh/t entspricht. Zudem erfolgt durch ein Mischen des Schüttguts ein mechanischer Energieeintrag, was ebenfalls zu einer Temperaturerhöhung führen kann. Ein spezifischer mechanischer Energieeintrag beim Pelletieren von vitalem Weizengluten liegt häufig im Bereich von 5-20 kWh/t. Durch das erfindungsgemässe Verfahren, bei dem im Wesentlichen keine aktive Heizung des Schüttguts beispielsweise durch die Zuführung von Dampf erfolgt, kann somit eine Energieeinsparung von zumindest ca. 60% erzielt werden.

Erfindungsgemäss werden zumindest die Teile der Konditioniereinrichtung mit einer Heizeinrichtung erwärmt, die bei bestimmungsgemässem Gebrauch mit dem gegebenenfalls benetzten Schüttgut in Kontakt kommen können. Bevorzugt erfolgt die Erwärmung derart, dass eine Erhöhung der Eingangstemperatur des Schüttguts um höchstens 5°C und bevorzugt um höchsten 1°C erfolgt durch die Heizeinrichtung erfolgt.

Dies hat den Vorteil, dass eine Kondensatbildung in der Konditioniereinrichtung im Wesentlichen vermieden werden kann, was eine Wahrscheinlichkeit für das Auftreten von Verklebungen in der Konditioniereinrichtung oder auch an dem Pelletpresseneinlass reduziert.

Bevorzugt wird dem Schüttgut Flüssigkeit im Bereich von 0,1 Gew.-% bis 15 Gew.-%, bevorzugt von 1 Gew.-% bis 10 Gew.-%, bezogen auf ein Eingangsgewicht des Schüttguts zugegeben.

Dies hat den Vorteil, dass durch die entsprechende Wasserzugabe Pellets optimaler Formstabilität herstellbar sind durch die Erzeugung der Bindungskräfte.

Bevorzugt wird die zumindest eine zerstäubte Flüssigkeit aus den folgenden Flüssigkeiten ausgewählt: im Wesentlichen Wasser; im Wesentlichen Sirup; eine Mischung von Wasser und Sirup. Insbesondere umfasst die zumindest eine zerstäubte Flüssigkeit zumindest einen Zusatzstoff. Der Zusatzstoff ist bevorzugt zumindest ein Vitamin und/oder zumindest ein Mineralstoff.

Dies hat den Vorteil, dass entsprechend den Anforderungen an das herzustellende Pellet die zu zerstäubende Flüssigkeit wählbar ist, um eine optimales Pellet für die gegebene Verwendung herstellen zu können. Beispielsweise können als Flüssigkeit und gegebenenfalls als Zusatzstoffe weitere geeignete Fischfutterzutaten zugegeben werden.

Ein "Sirup" kann im Sinne der Anmeldung ein flüssiges Restprodukt aus der Verarbeitung eines Naturprodukts sein, welches beispielsweise in einer Bioraffinerie verarbeitet wurde; bei derartigen Naturprodukten kann es sich beispielsweise um Weizen oder auch Mais handeln.

Bevorzugt werden zumindest eine Flüssigkeit oder zumindest zwei verschiedene Flüssigkeiten parallel zerstäubt zum Benetzen des Schüttguts.

Unter einer parallelen Zerstäubung der Flüssigkeit wird im Sinne der vorliegenden Anmeldung verstanden, dass zumindest zwei Benetzungseinrichtungen vorgesehen sind, in denen die gleiche Flüssigkeit gleichzeitig verwendet wird. Alternativ ist bei der parallelen Benetzung auch die Verwendung verschiedener Flüssigkeiten in den Benetzungseinrichtungen möglich. Beispielsweise kann in einer ersten Benetzungseinrichtung im Wesentlichen Wasser zerstäubt werden, während in der zweiten Benetzungseinrichtung im Wesentlichen Sirup zerstäubt wird.

Die parallele Benetzung insbesondere entlang der Förderrichtung des Schüttguts hat den Vorteil, dass die Durchführung von zwei aufeinander folgenden Benetzungsschritten das Eindringen der Flüssigkeit in das Schüttgut häufig verbessert. Zudem ist eine schonendere Benetzung möglich, da jeweils bei den aufeinander folgenden Benetzungsschritten beispielsweise weniger Flüssigkeit aufgebracht werden muss.

Selbstverständlich ist aber auch eine sequentielle Benetzung mit einer einzigen Benetzungseinrichtung möglich. Bevorzugt werden dann also zumindest zwei verschiedene Flüssigkeiten sequentiell zerstäubt zum Benetzen des Schüttguts.

Unter einer sequentiellen Zerstäubung der Flüssigkeit wird im Sinne der Anmeldung verstanden, dass nacheinander eine erste Flüssigkeit wie beispielsweise im Wesentlichen Wasser zerstäubt wird und anschliessend eine zweite Flüssigkeit wie beispielsweise im Wesentlichen Sirup oder eine Mischung aus Wasser und Sirup aus einer Benetzungseinrichtung.

Die sequentielle Benetzung hat den Vorteil, dass eine Benetzungseinrichtung optimal einstellbar ist im Hinblick auf die Flüssigkeitseigenschaften wie beispielsweise deren Viskosität, so dass eine optimale Zerstäubung der Flüssigkeiten erreichbar ist. Zudem kann vorteilhaft erreicht werden, dass Inhaltsstoffe in den Flüssigkeiten durch das Schüttgut besser aufgenommen werden können; beispielsweise kann bei einer ersten Benetzung mit Wasser die Aufnahmefähigkeit des Schüttguts für die nachfolgende Benetzung mit Sirup oder auch Wasser mit Zusatzstoffen verbessert werden.

Die zerstäubte Flüssigkeit kann eine Temperatur im Bereich von 5°C bis 40°C aufweisen. Bevorzugt weist die zerstäubte Flüssigkeit eine Temperatur im Bereich von 10°C bis 30°C und besonders bevorzugt von 10°C bis 25°C auf.

Dies hat den Vorteil der Vermeidung einer Denaturierung des Proteins zur Ermöglichung der Herstellung von Pellets mit optimalen Eigenschaften für die weitere Verwendung der Pellets. Zudem wird vorteilhaft der Energieverbrauch gegenüber dem Stand der Technik bei der Pelletherstellung verringert, da im Wesentlichen keine Erwärmung der zerstäubten Flüssigkeit notwendig ist.

Erfindungsgemäss wird die Flüssigkeit mittels einer Zweistoffdüse zerstäubt. Die Zweistoffdüse umfasst zumindest eine Gaszuführleitung und zumindest eine Flüssigkeitszuführleitung.

Die Verwendung einer Zweistoffdüse, die auch als pneumatischer Zerstäuber bezeichnet wird, hat den Vorteil, dass eine im Wesentlichen homogene Benetzung des Schüttguts in der Konditioniereinrichtung gewährleistet werden kann. Zudem erlauben Zweistoffdüsen eine kompakte Bauweise auch bei einer im Wesentlichen homogenen Benetzung einer grossen Fläche mittels der Zweistoffdüse; somit kann die notwendige Anzahl an Zweistoffdüsen verringert werden bei gleichzeitig kompakter Bauweise der Konditioniereinrichtung, was im Betrieb und in der Herstellung kostengünstig ist.

Bevorzugt ist die Gaszufuhrleitung druckgeregelt und die Flüssigkeitszufuhrleitung durchsatzgeregelt, wobei eine Flüssigkeitsmenge in einem mit der Zweistoffdüse erzeugten Flüssigkeitskegel und/oder eine Form des Flüssigkeitskegels geregelt werden. Die Regelung erfolgt mittels des Drucks in der druckgeregelten Gaszufuhrleitung und/oder des Durchsatzes durch die durchsatzgeregelte Flüssigkeitszufuhrleitung.

Dies hat den Vorteil der Anpassbarkeit der Benetzung des Schüttguts in der Konditioniereinrichtung beispielsweise in Abhängigkeit von einer Füllhöhe des Schüttguts in der Konditioniereinrichtung. Zudem erlaubt die Verwendung der Zweistoffdüse die zuverlässige Erzeugung des Flüssigkeitskegels auch bei niedrigen Flüssigkeitsmengen, was beispielsweise bei auf eine Flüssigkeitszufuhr empfindlich reagierenden Schüttgütern eine schonende Benetzung erlaubt.

Insbesondere unterscheidet sich das mit einer erfindungsgemässen Vorrichtung hergestellte Pellet durch eine geringere Denaturierung der Proteine, insbesondere des Glutens, gegenüber dem Stand der Technik, da ein solches Pellet nicht einer Temperaturerhöhung beispielsweise durch eine Dampfbehandlung unterworfen wird.

Das Pellet kann beispielsweise gegenüber Pellets aus dem Stand der Technik mehr vitales Gluten enthalten, was unter anderem zu einer verbesserten Bindekraft und damit zu einer besseren Formstabilität der Pellets führt.

Ein Pellet wie vorstehend beschrieben kann zum Füttern eines Tieres verwendet werden. Insbesondere kann das Pellet als Fischfutter umfassend weitere geeignete Fischfutterzutaten verwendet werden.

Die erfindungsgemässe Vorrichtung umfasst eine Pelletpresse zum Herstellen von Pellets aus einem benetzten Schüttgut und einer stromaufwärts der Pelletpresse angeordneten Konditioniereinrichtung. Die Konditioniereinrichtung umfasst zumindest eine Benetzungseinrichtung zum Zerstäuben einer Flüssigkeit zum Benetzten des Schüttguts mit der zerstäubten Flüssigkeit.

Erfindungsgemäss ist die Konditioniereinrichtung als Mischer ausgebildet, wobei der Mischer insbesondere zumindest zwei Benetzungseinrichtungen umfasst.

Beispielsweise können bei Anordnung von zumindest zwei Benetzungseinrichtungen in diesen gleiche Flüssigkeiten zerstäubt werden zum parallelen Benetzen des Schüttguts. Alternativ können unterschiedliche Flüssigkeiten in den zumindest zwei Benetzungseinrichtungen zerstäubt werden zur parallelen Benetzung des Schüttguts mit unterschiedlichen Flüssigkeiten. Selbstverständlich ist es auch denkbar, in jeder der zumindest zwei Benetzungseinrichtungen sequentiell unterschiedliche Flüssigkeiten zu zerstäuben.

Bevorzugt umfasst der Mischer eine Mischschnecke zum Mischen und Fördern des Schüttguts und/oder des benetzten Schüttguts. Insbesondere sind gegebenenfalls die zumindest zwei Benetzungseinrichtungen entlang einer Mischschneckenachse voneinander beabstandet.

Dies hat den Vorteil der effizienten Förderung und/oder Mischung des Schüttguts in dem Mischer, wobei die Verwendung einer Mischschnecke im Betrieb zuverlässig ist. Durch die Beabstandung von zumindest zwei Benetzungseinrichtungen kann eine weiter verbesserte Benetzung erfolgen, da häufig die Durchführung von zwei aufeinander folgenden Benetzungsschritten das Eindringen der Flüssigkeit in das Schüttgut verbessert.

Erfindungsgemäss weist der Mischer und ggf die Mischschnecke eine Antihaftbeschichtung auf. Eine solche Antihaftbeschichtung kann bevorzugt nur an den Abschnitten des Mischer und der Mischschnecke angebracht werden, die in Kontakt mit dem Schüttgut kommen und besteht bevorzugt aus PTFE.

Dabei werden Anlagerungen von Schüttgut, welche dann als Rückstände in der Vorrichtung verbleiben, weitestgehend vermieden. Auch wird dabei eine Selbstreinigung der Vorrichtung erreicht, so dass eine anschliessende manuelle oder maschinelle Reinigung weniger zeit- und materialintensiv ausfällt. Insbesondere können evtl. vorhandene Rückstände einfach mit einer Kunststoffspachtel oder dgl. entfernt werden. Ferner wird dabei eine verbesserte Benetzung des Schüttguts erreicht, da aufgrund der Antihaftbeschichtung das Schüttgut besser vermischt werden kann.

Erfindungsgemäss ist die zumindest eine Benetzungseinrichtung als Zweistoffdüse ausgebildet mit zumindest einer Gaszufuhrleitung und zumindest einer Flüssigkeitszufuhrleitung.

Derartige Zweistoffdüsen sind aus dem Stand der Technik bekannt und werden beispielsweise von der Firma Lechler vertrieben.

Besonders bevorzugt ist die Gaszufuhrleitung druckregelbar und/oder die Flüssigkeitszufuhrleitung durchsatzregelbar.

Beispielsweise kann eine Druckregelung durch einen Kompressor erfolgen; ein Durchsatz von Flüssigkeit durch die Flüssigkeitszufuhrleitung kann durch eine Hydraulikpumpe geregelt werden.

Erfindungsgemäss weist die Konditioniereinrichtung eine Heizeinrichtung auf zumindest zur Heizung der Schüttgutführenden Teile der Konditioniereinrichtung. Insbesondere ist ein Mantel des Mischers erwärmbar. Dadurch kann vorteilhaft eine Kondensatbildung in der Konditioniereinrichtung im Wesentlichen vermieden werden.

Die Erwärmung kann beispielsweise durch eine elektrische Heizung des Mantels des Mischers erfolgen.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist. Es zeigen:

Figur 1: Schematische Seitenansicht einer erfindungsgemässen Vorrichtung zur Pelletierung von glutenhaltigem Schüttgut umfassend vier Zweistoffdüsen;

Figur 2: Schematische Seitenansicht einer alternativen erfindungsgemässen Vorrichtung zur Pelletierung von glutenhaltigem Schüttgut mit einer Zweistoffdüse;

Figur 3: Schematische Ansicht einer Zweistoffdüse mit Gaszufuhrleitung und Flüssigkeitszufuhrleitung.

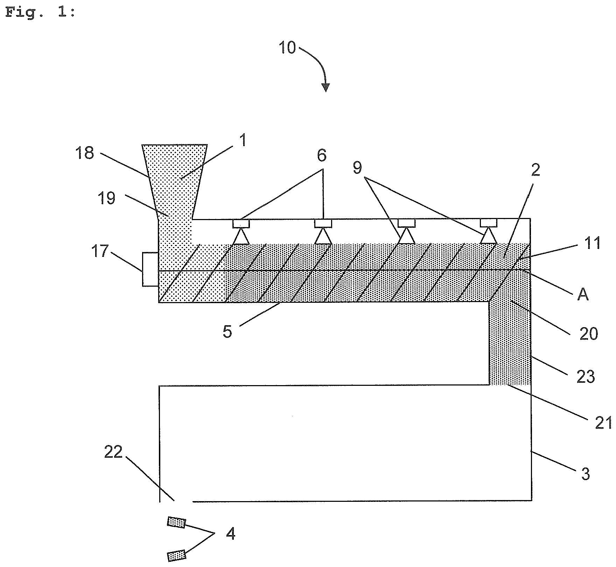

In Figur 1 ist in einer schematischen Seitenansicht eine erfindungsgemässe Vorrichtung 10 zur Pelletierung von glutenhaltigem Schüttgut 1 dargestellt.

Das Schüttgut 1 befindet sich in einem Zufuhrtrichter 18, aus dem das Schüttgut 1 durch einen Mischereinlass 19 in einen Mischer 5 gefördert wird. Die Förderung erfolgt mittels Schwerkraft. Zur Einstellung der Menge an Schüttgut 1 in dem Mischer 5 kann ein Querschnitt des Mischereinlasses 19 eingestellt werden mittels einer hier nicht dargestellten Verschliesseinrichtung; zudem ist der Mischereinlass 19 gegebenenfalls öffenbar oder schliessbar mittels der hier nicht dargestellten Verschliesseinrichtung.

Der Mischer 5 umfasst eine Mischschnecke 11 mit einer Mischschneckenachse A. Der Mischer 5 ist antreibbar mittels einem Antrieb 17, mit dem die Mischschnecke 11 in Rotation versetzbar ist zum Fördern und Mischen des Schüttguts 1.

Mittels der Mischschnecke 11 wird das Schüttgut 1 zu einem Mischerauslass 20 gefördert. Entlang der Mischschneckenachse A sind vier Zweistoffdüsen 6 angeordnet zur Erzeugung von entsprechenden Flüssigkeitskegeln 9. Die Zweistoffdüsen 6 sind dabei so betreibbar, dass unterschiedliche Flüssigkeiten in den Zweistoffdüsen 6 parallel oder sequentiell zerstäubbar sind.

Mittels der erzeugten Flüssigkeitskegel 9 kann das Schüttgut 1 mit Flüssigkeit benetzt werden zur Erzeugung eines benetzten Schüttguts 2. Die Anordnung von vier entlang der Mischschneckenachse A beabstandeten Zweistoffdüsen 6 erlaubt eine homogene Benetzung des Schüttguts 1 und eine grosse Flexibilität im Hinblick auf die Kombination verschiedener Flüssigkeiten zur Benetzung.

Als Flüssigkeit wird Wasser einer Temperatur von ca. 18°C - 20°C verwendet.

Das in den Mischer 5 geförderte glutenhaltige Schüttgut 1 wird entlang der Mischschneckenachse A durch die Mischschnecke 11 gefördert und währenddessen benetzt und gemischt. Durch den Mischerauslass 20 wird das benetzte Schüttgut 2 durch eine Fördereinrichtung 23, die hier als Rohr ausgebildet ist, zu einem Pelletpresseneinlass 21 der Pelletpresse 3 geführt. Derartige Pelletiersysteme sind dem Fachmann aus dem Stand der Technik bekannt und werden beispielsweise von der Firma Bühler unter der Bezeichnung "HYSYS" vertrieben.

In der Pelletpresse 3 werden Pellets 4 aus dem benetzten Schüttgut 2 hergestellt und zu einem Pelletpressenauslass 22 gefördert und entsprechend weiter transportiert.

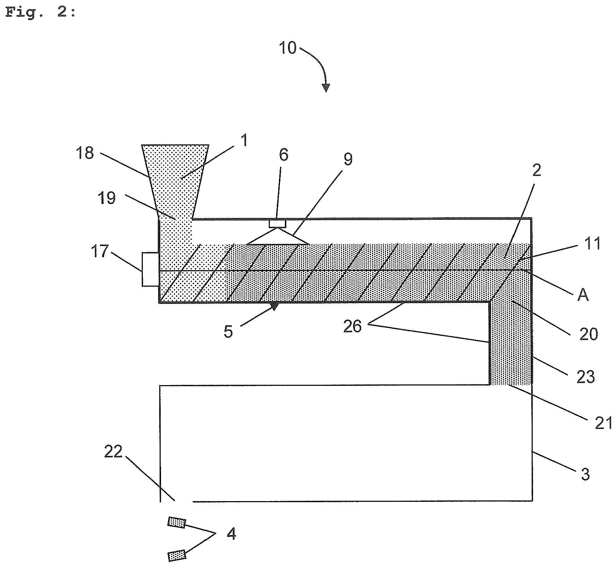

In Figur 2 ist in einer schematischen Seitenansicht eine alternative erfindungsgemässe Vorrichtung 10 zur Pelletierung von glutenhaltigem Schüttgut 1 dargestellt.

Gleiche Referenzzeichen bezeichnen gleiche Merkmale in allen Figuren und werden deshalb nur bei Bedarf erneut erläutert.

Im Unterschied zur Vorrichtung gemäss Figur 1 umfasst die Vorrichtung 10 gemäss Figur 2 nur eine Zweistoffdüse 6. Im Unterschied zur Figur 1 ist der Flüssigkeitskegel 9 gemäss Figur 2 breiter eingestellt, so dass ein grösserer Teil der Oberfläche des der Zweistoffdüse 6 zugewandten Schüttguts mittels der Zweistoffdüse 6 benetzbar ist.

Zudem weist der Mischer 5 einen Mantel 26 auf, der erwärmbar ist mittels im Mantel 26 angeordneten Heizdrähten, so dass eine elektrische Heizung erfolgen kann. Auch die als Rohr ausgebildete Fördereinrichtung 23 weist im Mantel des Rohres Heizdrähte auf zum Heizen der Fördereinrichtung 23. Somit kann eine Kondensatbildung in dem Mischer und der Fördereinrichtung 23 im Wesentlichen vermieden werden.

Selbstverständlich ist es auch denkbar, anstelle einer elektrischen Heizung den Mantel 26 als Doppelwand auszubilden und zur Erwärmung ein heisses Gas oder eine heisse Flüssigkeit in die Doppelwand zu leiten.

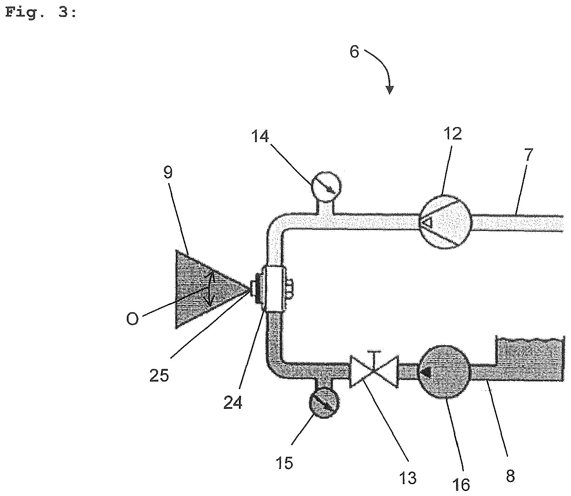

In Figur 3 ist in einer schematischen Seitenansicht eine erfindungsgemässe Zweistoffdüse 6 dargestellt.

Die Zweistoffdüse 6 umfasst einen Düsenkörper 24 mit einer Düsenöffnung 25, aus der die zerstäubte Flüssigkeit austreten kann zur Erzeugung des Flüssigkeitskegels 9.

Die Zweistoffdüse 6 umfasst eine druckgeregelte Gaszufuhrleitung 7 mit einem Druckregler 12, der hier als Kompressor ausgebildet ist. Mittels eines Drucksensors 14 kann der Druck in der Gaszufuhrleitung 7 geregelt werden. Hierzu wird in Abhängigkeit von der Messung des Drucks in der Gaszufuhrleitung 7 mittels des Drucksensors 14 der Kompressor so eingestellt, dass der gewünschte Druck in der Gaszufuhrleitung 7 herrscht.

Die Zweistoffdüse 6 umfasst weiter eine durchsatzgeregelte Flüssigkeitszufuhrleitung 8. In der Flüssigkeitszufuhrleitung 8 ist als Durchsatzregler 16 eine Hydraulikpumpe zur Regelung des Durchsatzes an Flüssigkeit durch die Flüssigkeitszufuhrleitung 8 angeordnet.

Zudem umfasst die Flüssigkeitszufuhrleitung 8 ein Absperrventil 13, mit dem die Flüssigkeitszufuhrleitung abgesperrt werden kann, so dass keine Flüssigkeit zum Düsenkörper 24 mehr gefördert wird; dies kann beispielsweise bei einer Unterbrechung des Verfahrens vorteilhaft sein, so dass keine Flüssigkeit unerwünscht in eine Konditioniereinrichtung fliessen kann.

Zudem ist in der Flüssigkeitszufuhrleitung 8 ein Durchsatzsensor 15 angeordnet, mit dem der Durchsatz an Flüssigkeit durch die Flüssigkeitszufuhrleitung 8 überwacht werden kann. Basierend auf dem Signal des Durchsatzsensors 15 kann die Hydraulikpumpe so geregelt werden, dass die gewünschte Menge an Flüssigkeit durch die Flüssigkeitszufuhrleitung 8 zum Düsenkörper 24 gefördert wird.

Durch die Einstellung des Drucks in der Gaszufuhrleitung 7 und der Einstellung des Durchsatzes in der Flüssigkeitszufuhrleitung 8 kann der Flüssigkeitskegel 9 eingestellt werden, beispielsweise in Bezug auf einen Öffnungswinkel O des Flüssigkeitskegels 9. Zudem hängt die Art des erzeugten Flüssigkeitskegels 9 von dem verwendeten Düsenkörper 24 ab.

## Patentansprüche

1. Vitalweizenglutenpelletierungsvorrichtung (10) zur Pelletierung von Schüttgut (1) enthaltend zumindest 95 Gew.-% vitales Weizengluten, insbesondere zur Futtermittelherstellung, zur Durchführung eines Verfahrens umfassend die folgenden Schritte:

   a) Fördern des Schüttguts (1) in eine Konditioniereinrichtung;
   b) Benetzen des Schüttguts (1) in der Konditioniereinrichtung mit zumindest einer zerstäubten Flüssigkeit zur Erhöhung des Feuchtigkeitsgehalts des Schüttguts (1), wobei eine Temperatur der zerstäubten Flüssigkeit kleiner als 100 °C ist;
   c) Fördern des benetzten Schüttguts (2) in eine Pelletpresse (3) zum Pelletieren des benetzten Schüttguts (2);
   d) Abführen der Pellets (4) aus der Pelletpresse (3),

   wobei die Vorrichtung (10) die Pelletpresse (3) und die stromaufwärts der Pelletpresse (3) angeordnete Konditioniereinrichtung umfasst, wobei die Konditioniereinrichtung als Mischer (5) ausgebildet ist und zumindest eine Benetzungseinrichtung umfasst zum Zerstäuben einer Flüssigkeit zum Benetzen des Schüttguts (1) mit der zerstäubten Flüssigkeit, **dadurch gekennzeichnet, dass** die zumindest eine Benetzungseinrichtung als Zweistoffdüse (6) ausgebildet ist mit zumindest einer Gaszufuhrleitung (7) und zumindest einer Flüssigkeitszufuhrleitung (8), dass der Mischer eine zumindest teilweise Antihaftbeschichtung aufweist, und dass die Konditioniereinrichtung eine Heizeinrichtung zumindest zur Heizung der schüttgutführenden Teile der Konditioniereinrichtung aufweist.

2. Vorrichtung (10) nach Anspruch 1, **dadurch gekennzeichnet, dass** die Antihaftbeschichtung aus PTFE besteht.

3. Vorrichtung (10) nach Anspruch 1 oder 2, **dadurch gekennzeichnet, dass** die Gaszufuhrleitung (7) druckregelbar ist.

4. Vorrichtung (10) nach einem der Ansprüche 1 bis 3, **dadurch gekennzeichnet, dass** die Flüssigkeitszufuhrleitung (8) durchsatzregelbar ist.

5. Vorrichtung (10) nach einem der Ansprüche 1 bis 4, **dadurch gekennzeichnet, dass** die Konditioniereinrichtung zumindest zwei Benetzungseinrichtungen umfasst.

6. Vorrichtung (10) nach einem der Ansprüche 1 bis 5, **dadurch gekennzeichnet, dass** der Mischer (5) eine Mischschnecke (11) zum Mischen und Fördern des Schüttguts (1) und/oder des benetzten Schüttguts (2) umfasst, wobei insbesondere gegebenenfalls die zumindest zwei Benetzungseinrichtungen entlang einer Mischschneckenachse (A) voneinander beabstandet sind.

7. Vorrichtung (10) nach Anspruch 6, **dadurch gekennzeichnet, dass** die Mischschnecke (11) eine zumindest teilweise Antihaftbeschichtung, bevorzugt aus PTFE, aufweist.

8. Vorrichtung nach einem der Ansprüche 1 bis 7, **dadurch gekennzeichnet, dass** die Heizeinrichtung als Heizmantel ausgebildet ist.

**Claims**

1. Vital wheat gluten pelletization device (10) for pelletizing bulk material (1) containing at least 95% by weight of vital wheat gluten, in particular for fodder production, for carrying out a method comprising the following steps:

   a) conveying the bulk material (1) into a conditioning device;
   b) wetting the bulk material (1) in the conditioning device with at least one atomized liquid for increasing the moisture content of the bulk material (1), wherein a temperature of the atomized liquid is less than 100°C;
   c) conveying the wetted bulk material (2) into a pellet press (3) for pelletizing the wetted bulk material (2);
   d) removing the pellets (4) from the pellet press (3),

   wherein the device (10) comprises the pellet press (3) and the conditioning device arranged upstream of the pellet press (3), wherein the conditioning device is designed in the form of a mixer (5) and comprises at least one wetting device for atomizing a liquid for wetting the bulk material (1) with the atomized liquid, **characterized in that** the at least one wetting device is designed in the form of a two-substance nozzle (6) with at least one gas supply line (7) and at least one liquid supply line (8), **in that** the mixer has an anti-adhesion coating, and **in that** the conditioning device has a heating device at least for heating the bulk material-conveying parts of the conditioning device.

2. Device (10) according to Claim 1, **characterized in that** the anti-adhesion coating consists of PTFE.

3. Device (10) according to Claim 1 or 2, **characterized in that** the pressure of the gas supply line (7) can be regulated.

4. Device (10) according to any of Claims 1 to 3, **characterized in that** the throughput of the liquid supply line (8) can be regulated.

5. Device (10) according to any of Claims 1 to 4, **characterized in that** the conditioning device comprises at least two wetting devices.

6. Device (10) according to any of Claims 1 to 5, **characterized in that** the mixer (5) comprises a mixing screw (11) for mixing and conveying the bulk material (1) and/or the wetted bulk material (2), wherein in particular, if appropriate, the at least two wetting devices are spaced apart from one another along a mixing screw axis (A).

7. Device (10) according to Claim 6, **characterized in that** the mixing screw (11) has an at least partial anti-adhesion coating, preferably composed of PTFE.

8. Device according to any of Claims 1 to 7, **characterized in that** the heating device is designed in the form of a heating jacket.


**Revendications**

1. Dispositif de pelletisation de gluten de blé vital (10) pour la pelletisation de produits en vrac (1) contenant au moins 95 % en poids de gluten de blé vital, en particulier pour la fabrication d'aliments, pour la mise en oeuvre d'un procédé comprenant les étapes suivantes:

   a) transporter les produits en vrac (1) dans un dispositif de conditionnement;
   b) humidifier les produits en vrac (1) dans le dispositif de conditionnement avec au moins un liquide pulvérisé afin d'augmenter la teneur en humidité des produits en vrac (1), dans lequel une température du liquide pulvérisé est inférieure à 100°C;
   c) transporter les produits en vrac humidifiés (2) dans une presse de pelletisation (3) afin de pelletiser les produits en vrac humidifiés (2);
   d) évacuer les pellets (4) hors de la presse de pelletisation (3),

   dans lequel le dispositif (10) comprend la presse de pelletisation (3) et le dispositif de conditionnement disposé en amont de la presse de pelletisation (3), dans lequel le dispositif de conditionnement est constitué par un mélangeur (5) et comprend au moins un dispositif d'humidification pour pulvériser un liquide destiné à humidifier les produits en vrac (1) avec le liquide pulvérisé, **caractérisé en ce que** ledit au moins un dispositif d'humidification est formé par une buse pour deux matériaux (6) avec au moins une conduite d'arrivée de gaz (7) et au moins une conduite d'arrivée de liquide (8), **en ce que** le mélangeur présente un revêtement anti-adhérent au moins partiel, et **en ce que** le dispositif de conditionnement présente un dispositif de chauffage au moins pour le chauffage des parties du dispositif de conditionnement guidant les produits en vrac.

2. Dispositif (10) selon la revendication 1, **caractérisé en ce que** le revêtement anti-adhérent est composé de PTFE.

3. Dispositif (10) selon la revendication 1 ou 2, **caractérisé en ce que** la conduite d'arrivée de gaz (7) est réglable en pression.

4. Dispositif (10) selon l'une quelconque des revendications 1 à 3, **caractérisé en ce que** la conduite d'arrivée de liquide (8) est réglable en débit.

5. Dispositif (10) selon l'une quelconque des revendications 1 à 4, **caractérisé en ce que** le dispositif de conditionnement comprend au moins deux dispositifs d'humidification.

6. Dispositif (10) selon l'une quelconque des revendications 1 à 5, **caractérisé en ce que** le mélangeur (5) comprend une vis mélangeuse (11) pour le mélange et le transport des produits en vrac (1) et/ou des produits en vrac humidifiés (2), dans lequel en particulier lesdits au moins deux dispositifs d'humidification sont le cas échéant espacés l'un de l'autre le long d'un axe (A) de la vis mélangeuse.

7. Dispositif (10) selon la revendication 6, **caractérisé en ce que** la vis mélangeuse (11) présente un revêtement anti-adhérent au moins partiel, de préférence en PTFE.

8. Dispositif selon l'une quelconque des revendications 1 à 7, **caractérisé en ce que** le dispositif de chauffage est formé par une chemise chauffante.

Fig. 1:

Fig. 2:

Fig. 3:

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1785039 B1
- EP 0711510 B1
- US 5308566 A
- US 4929163 A
- EP 0040406 A1

**In der Beschreibung aufgeführte Nicht-Patentliteratur**

- **XIAO et al.** Solvent Retention Capacity Values in Relation to Hard Winter Wheat and Flour Properties and Straight Dough Breadmaking Quality. *Cereal Chem.,* vol. 83 (5), 465-471
- **KRATZER.** *Diss. ETH Zürich,* 2007